Europäisches Patentamt

European Patent Office

Office européen des brevets

(11) Publication number: **0 134 837**

**B1**

(12) **EUROPEAN PATENT SPECIFICATION**

(45) Date of publication of patent specification: **24.02.88**

(51) Int. Cl.⁴: **G 01 B 7/28**, G 01 C 7/04, G 01 M 19/00

(21) Application number: **83109387.7**

(22) Date of filing: **21.09.83**

(54) Method and system for measurement of road profile.

(43) Date of publication of application:
**27.03.85 Bulletin 85/13**

(45) Publication of the grant of the patent:
**24.02.88 Bulletin 88/08**

(84) Designated Contracting States:
**DE FR GB SE**

(56) References cited:
**US-A-3 266 302**
**US-A-4 135 304**
**US-A-4 158 258**

(73) Proprietor: **Spangler, Elson B.**
**1465 Sodon Lake Drive**
**Bloomfield Hills, MI 48013 (US)**

(72) Inventor: **Spangler, Elson B.**
**1465 Sodon Lake Drive**
**Bloomfield Hills, MI 48013 (US)**

(74) Representative: **Dipl.-Ing. H. Hauck Dipl.-Phys. W. Schmitz Dipl.-Ing. E. Graalfs Dipl.-Ing. W. Wehnert Dr.-Ing. W. Döring**
**Mozartstrasse 23**
**D-8000 München 2 (DE)**

Courier Press, Leamington Spa, England.

## Description

The present invention relates to apparatus and method for measurement of surface profile, and more particularly to apparatus and method for measuring the profile of a vehicle travel surface such as a road or runway. Yet more specifically, the invention relates to improvements in the apparatus and method disclosed and claimed in the Patent US—A—3,266,302.

The term "road" is used herein in a generic sense to include highways, streets and the like commonly travelled by automotive vehicles, runways and other surfaces used by aircraft for take-off and landing, railways, and any other type of surface over which a vehicle may travel. The term "time domain" used herein to express time dependency and the term "spatial domain" is used herein to express time independency.

Background of the invention

In accordance with the teachings of Patent US—A—3,266,302, a measurement vehicle is propelled over a road surface, and surface profile (W) is measured as a conjoint function of displacement of the vehicle suspension system (W—Y) and the twice-integrated output (Ÿ) of an accelerometer carried by the vehicle. The disclosed system is described as effecting profile measurement with respect to a plane of reference, defined by inertia of the vehicle, over a total frequency range of road surface undulations determined at lower frequencies by accelerometer response characteristics and at higher frequencies by the vehicle suspension displacement transducer. However, the signal/noise response capabilities of the accelerometer at lower frequencies and any steady-state offset in the electrical output of both transducers, coupled with the described double integration, limit the capabilities of the system to the extent disclosed in the referenced patent.

To overcome the low frequency response difficulties which inhere in the accelerometer/double-integration technique, it was proposed in Spangler et al, "A Method of Measuring Road Profile", GMR-452, General Motors Corp. (1964) to subject the accelerometer output to a time domain highpass filter for attenuating the low frequency response prior to time domain double integration. However, since the spatial frequency content of the road profile varies in proportion to vehicle velocity, the provision of the highpass time domain filter causes the measured profile to vary as a function of vehicle speed. This problem was alleviated to some extent by providing a highpass filter with a step-wise variable natural or cutoff frequency thereby to accommodate step-wise differing but constant vehicle speed.

A further improvement which is prior art to the present invention implemented time domain digital processing techniques in place of, but exactly analogous to, the analog time domain processing techniques proposed in the above-referenced patent and GMR paper. This improvement embodied the capacity for user-input of desired frequency (or wavelength) measuring capability and contemplated vehicle speed. A corresponding highpass filter natural frequency was computed and applied to the accelerometer output in time domain computation of road profile. Although the technique so implemented effectively replaces the earlier step-wise selectable filter with a continuously variable filter, it was still necessary to maintain a constant vehicle velocity during the measurement process.

Objects and summary of the invention

An object of the present invention is to provide a method and an apparatus of the described type which provide a profile output having a constant spatial frequency content independent of vehicle speed and/or variations in vehicle speed.

Another and more specific object of the invention is to provide a profile measurement method of the type described which is readily adaptable for either analog or digital implementation, and to provide analog and digital apparatus implementing such method.

A more general object of the invention is to provide an improved and reliable method and apparatus for measuring surface profile, with particular adaptation to road surface profile, which remedy some or all of the aforementioned deficiencies and shortcomings of the prior art.

The foregoing and other objects are accomplished in accordance with the invention by providing apparatus and method according to claims 1 and 4, respectively which measure road profile in the spatial domain rather than the time domain. Specifically, a transducer is responsive to rotation of a road-contacting wheel for initiating a road profile sample measurement at preselected distance intervals ds along the road surface. Profile W is then measured in accordance with the equation

$$W = (W-Y) + \int\int \frac{\ddot{Y}}{V^2} ds\, ds, \qquad (1)$$

where the quantity (W—Y) is a measure of displacement of the "sprung inertial vehicle" mass relative to the road surface, Y is acceleration of the "vehicle sprung inertial" mass normal to the road surface and V is vehicle velocity in the direction of travel. The quantity ($\ddot{Y}/V^2$) is a time-independent measure of spatial acceleration of the sprung inertial mass of the measurement vehicle. Thus, the units of all quantities in equation (1) are time-independent units of distance. Velocity V may be measured at each distance interval using a suitable transducer, or may be determined by the equation

$$V = \frac{ds}{dt} \qquad (2)$$

where dt is the time required to travel the distance interval ds.

Spatial acceleration given by the expression $(\ddot{Y}/V^2)$ is subjected to a highpass filtering operation to attenuate any low frequency and steady-state components of the transducer signals. However, the filter cutoff frequency, which is in time-independent spatial frequency units of radians per unit length, remains constant during the measurement cycle (following initialization) and produces a road profile measurement having the desired frequency (wavelength) information content regardless of vehicle velocity and/or changes in vehicle velocity.

Brief description of the drawings

The invention, together with additional objects, features and advantages thereof, will be best understood from the following description, the appended claims and the accompanying drawings in which:

Fig. 1 is a schematic diagram of a vehicle equipped with a road profilometer in accordance with the invention;

Fig. 2 is a functional block diagram of an analog embodiment of the road profile computer shown in block form in Fig. 1;

Fig. 3 is a flow chart of a digital embodiment of the road profile computer of Fig. 1 comprising a programmed digital computer;

Fig. 4 is a functional block diagram of a digital embodiment of the road profile computer of Fig. 1 corresponding to Fig. 3 but comprising discrete electronic hardware;

Fig. 5 is a fragmentary flow chart of a modification to Fig. 3 between lines A—A and B—B; and

Fig. 6 is a fragmentary functional block diagram of a corresponding modification of Fig. 4.

Detailed description of preferred embodiments

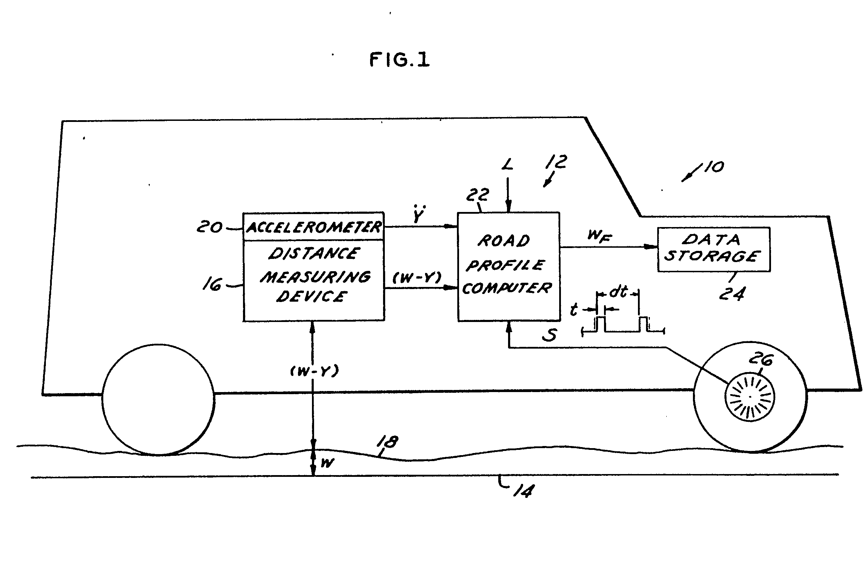

Fig. 1 illustrates a vehicle 10 equipped with a road profile measurement apparatus or profilometer 12 in accordance with the invention for measuring road profile W as a distance from an imaginary plane 14 defined by the inertia element of an accelerometer 20 mounted on the sprung vehicle mass. Apparatus 12 includes a distance measuring device or transducer 16 mounted with the accelerometer 20 on the sprung mass of vehicle 10 for measuring the distance (W—Y) to the actual road surface 18, which distance varies as a function of the vehicle suspension system (not shown) as vehicle 10 travels over the road surface. Device 16 may take the form of a road following wheel and a variable resistor as shown in the above-referenced patent mounted on a separate towed vehicle. Ultrasonic and other non-contact transducers have also been proposed and may be mounted on vehicle 10 per se.

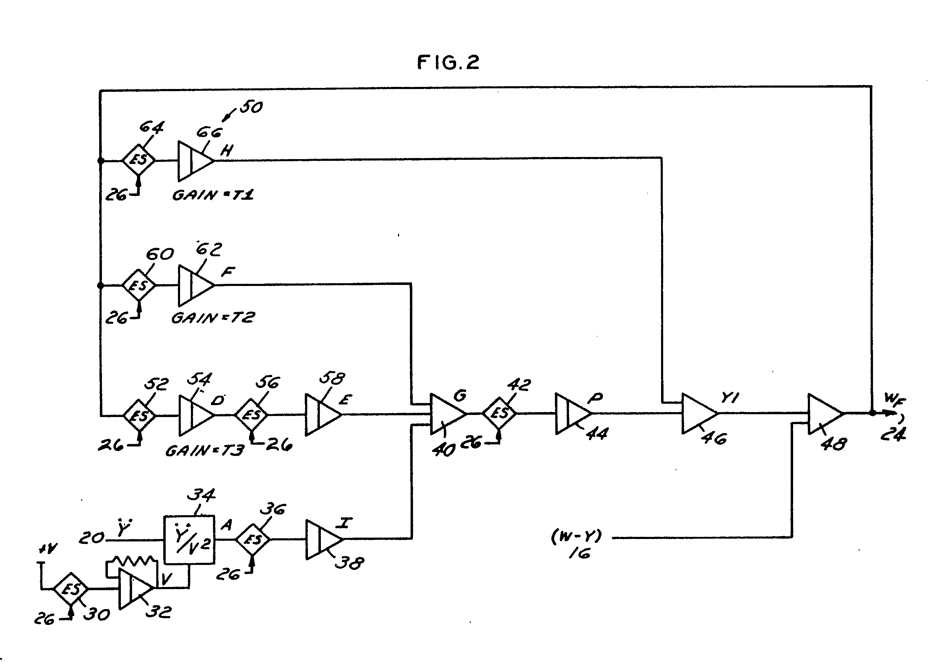

The accelerometer 20 mounted with displacement transducer 16 and responsive to acceleration of the sprung mass of the measurement vehicle in a direction perpendicular to inertial reference plane 14 to provide the acceleration signal $\ddot{Y}$. Accelerometer 20 and distance transducer 16 direct their respective outputs to a road profile computer indicated generally at 22. The above-referenced patent and GMR publication disclose prior art embodiments of computer 22 as previously discussed, and also discuss in detail background theory and operation of road profilometry in general. The patent and publication are referenced for such background discussions. Figs. 2—6 to be discussed in detail hereinafter illustrate various preferred embodiments of computer 22 in accordance with the present invention. The output $W_F$ of computer 22, which indicates profile W suitably spatially filtered to highlight spatial frequency (wavelength) content of interest, is fed to a data storage device 24, which may comprise a strip chart recorder, magnetic tape recorder, etc.

In accordance with the present invention, computer 22 operates exclusively in the spatial domain. In the preferred embodiment herein disclosed, such spatial domain operation is carried out under control of a train of distance pulses S received from a road travel distance measuring transducer 26. Transducer 26 may be suitably mounted to one of the vehicle wheels as shown, or to a separate "fifth wheel", so as to provide a pulse S of fixed time duration $t$ in response to travel of the vehicle over a predetermined fixed distance $ds$. Transducer 26 may comprise electro-optical couplers responsive to a suitably apertured disc for providing pulse S of duration $t$ at a rate $(1/ds)$ of twenty per foot (approximately 1.5 pulses per centimeter) of travel, for example. In this example, therefore, each pulse S indicates a distance $ds$ of 0.05 feet (1.524 cm). Time interval $dt$ between successive pulses S will vary with vehicle speed.

Fig. 2 is a functional block diagram of an analog embodiment of computer 22 for providing the filtered output $W_F$ as a function of inputs S, $\ddot{Y}$ and (W—Y) previously discussed. An electronic switch 30 is responsive to transducer 26 for connecting a voltage source to an integrator 32, the frequency of such connections, and therefore the output V of integrator 32, being a function of vehicle velocity. Math module 34 receives the accelerometer signal $\ddot{Y}$ and velocity signal V from integrator 32, and provides an output A as a function of the quantity $(\ddot{Y}/V^2)$. This quantity, which is an expression of acceleration in the spatial domain, is fed through an electronic switch 36 to an integrator 38. The output I of integrator 38 is fed to one input of a summing amplifier 40.

The output G of amplifier 40 is fed through an electronic switch 42 to an integrator 44 which has an output P connected to one input of a summing amplifier 46. The output Y1 of amplifier 46, which may be visualized in Fig. 1 as corresponding to the total distance from devices 16 and 20 to the inertial reference plane 14, is fed to a summing amplifier 48. Amplifier 48 receives a second input (W—Y) from device 16, and provides at its output the profile measurement $W_F$ as a function of the sum (W—Y)+Y1.

The highpass spatial domain analog filter of the embodiment of Fig. 2 is illustrated by the general reference numeral 50. The output $W_F$ of amplifier 48 is fed back through the electronic switch 52 to an integrator 54 which has a gain factor T3. The output D of integrator 54 is fed through an electronic switch 56 to an integrator 58, which has an output E fed to a second input of summing amplifier 40. The output $W_F$ of amplifier 48 is also fed through an electronic switch 60 to an integrator 62 having gain factor T2, and which has an output F fed to a third input of amplifier 40. The output $W_F$ of amplifier 48 is also fed through an electronic switch 64 and an integrator 66 with gain factor T1, the latter having an output H connected to the second input of summing amplifier 46.

The gains of integrators 66, 62, 54 correspond to the spatial highpass filter constants T1, T2, T3, which are respectively given by the following equations:

$$T1 = 2 \cdot \left(\frac{2\pi}{L}\right) \tag{3}$$

$$T2 = 2 \cdot \left(\frac{2\pi}{L}\right)^2 \tag{4}$$

$$T3 = \left(\frac{2\pi}{L}\right)^3 \tag{5}$$

where L (Fig. 1) is the maximum desired profile measurement wavelength preselected by an operator. (Means for presetting the gains of integrators 66, 62, 54 may be of conventional type and are not shown). The maximum desired wavelength L may be selected, for example, based upon the type of vehicle which will travel over the measured surface, normal traffic speed and passenger comfort. A maximum wavelength of 300 feet (91.4 meters) would be appropriate for medium size automobiles travelling 55 miles/hour (88.5 km/hr), while a wavelength of 550 feet (152.5 meters) may be appropriate for a commercial size passenger aircraft travelling at a runway speed of 100 miles/hr (160.9 kn/hr). Electronic switches 30, 36, 42, 52, 56, 60 and 64 are all identically responsive to pulses S from transducer 26 as previously described for connecting the corresponding input to the corresponding output for the fixed time duration $t$ upon occurrence of each pulse S.

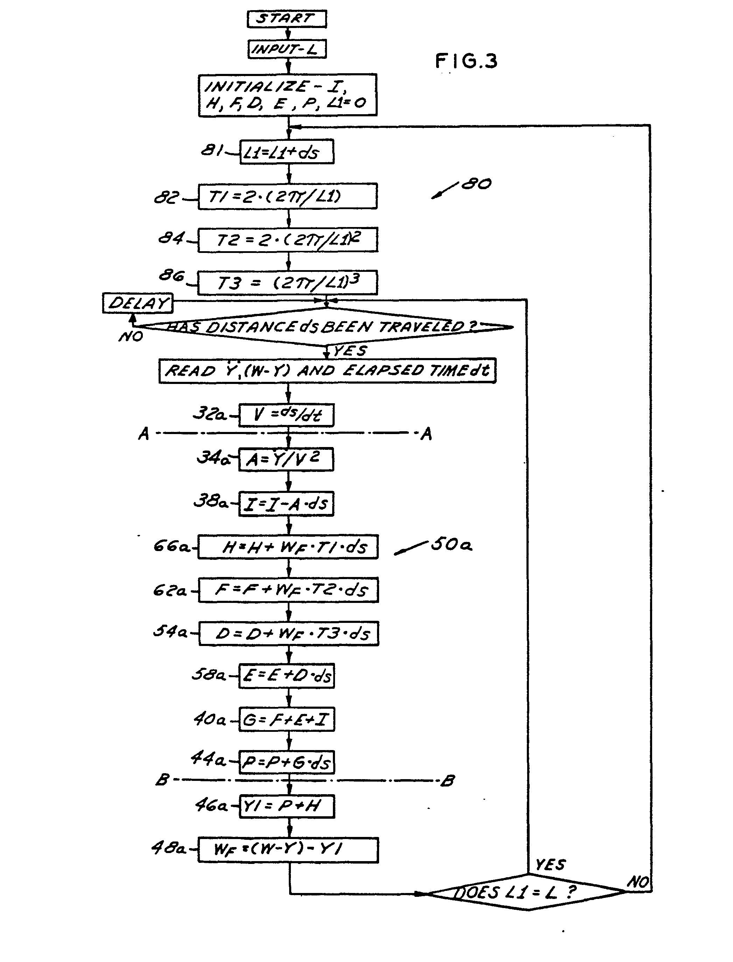

Fig. 3 illustrates the flow chart of a programmed digital computer embodiment of road profile computer 22 in Fig. 1. Letters and symbols used in Fig. 3, and in the succeeding drawings, correspond to letters and symbols previously discussed in connection with Figs. 1 and 2. Likewise, to facilitate appreciation of the analogous relationship between Figs. 2 and 3, and to forestall unnecessary repetition, stages in the flow chart of Fig. 3 which illustrate digital computation steps corresponding to analog stages in Fig. 2 are identified by corresponding reference numerals followed by the subscript $a$.

The process illustrated in Fig. 3 is characterized by an initialization technique illustrated by the stages 80 which allows spatial profile measurement on start-up independently of profiles previously measured, and by means of which the road profile measured during start-up has a spatial frequency content that exactly matches the spatial frequency filtering capability of the highpass digital filter 50a (corresponding to analog filter 50 in Fig. 2) at any given point in the initialization process. The initialization process ultimately sets the highpass spatial filter constants T1, T2 and T3 to correspond to the selected maximum desired measurement wavelength L, and reduces the effect of steady-state offset and low frequency noise in the output of accelerometer 20 and transducer 16 (Fig. 1) in the final output.

Immediately upon start-up, all variables I, H, F, D, E and P previously discussed are set at zero. L1, which in Fig. 3 is a variable which controls spatial frequency filter constants T1, T2 and T3, is initially set at zero and then incremented to $ds$ at 81. Filter constants T1, T2 and T3 are computed accordingly at stages 82, 84, 86 per preceding equations (3) to (5). Upon occurrence of an S pulse from transducer 26 (Fig. 1), accelerometer output Y is sampled, distance measuring device output (W—Y) is sampled and time $dt$ elapsed since the last S signal is read from a suitable internal clock. Velocity V is then determined as $ds/dt$, and digital computation of variables A, I, H, F, D, E, G, P, Y1 and $W_F$ proceed as shown and previously discussed. Note that inclusion of distance $ds$ in computation of integrated variables I, H, F, D, E and P is analogous in terms of operation in the spatial domain to inclusion of the S-operated electronic switches at the inputs of the analog integrators for computing the corresponding variables in Fig. 2.

Continuing the initialization process, i.e. until the variable L1 is equal to the user input L, L1 is incremented by the amount $ds$, and the filter constants T1, T2 and T3 are correspondingly recomputed on each pass—i.e. following each occurrence of an S pulse and computation of $W_F$. When L1 is finally equal to L, the filter constants are at their final value, and $W_F$ is effectively computed upon occurrence of each S pulse from transducer 26 (Fig. 1). A complete listing of instructions for implementing the process of Fig. 3 is BASIC source code is as follows:

```
100  ! START
110  INPUT L
120  I=0
130  H=0
140  F=0
150  D=0
160  E=0
170  P=0
180  L1=0
190  L1=L1+S ! S=ds
200  T1=2*(2*PI/L1)
210  T2=2*(2*PI/L1)^2
```

```
220  T3=(2*PI/L1)∧3
230  ! HAS DISTANCE ds BEEN TRAVELED?
240  IF NO THEN 230
250  IF YES THEN 260
260  ! READ ACCELERATION (y2)
270  ! READ DISPLACEMENT (W—Y)
280  ! READ ELAPSED TIME (dt)
290  V=S/T ! T=dt
300  A=Y2/V∧2
310  I=I−A*S
320  H=H+W1+T1*S ! W1=Wf
330  F=F+W1+T2*S
340  D=D+W1+T3*S
350  E=E+D*S
360  G=F+E+I
370  P=P+G*S
380  Y1=P+H
390  W1=W—Y—Y1 ! W1=Wf
400  IF L1=L THEN 230
410  GO TO 190
420  END
```

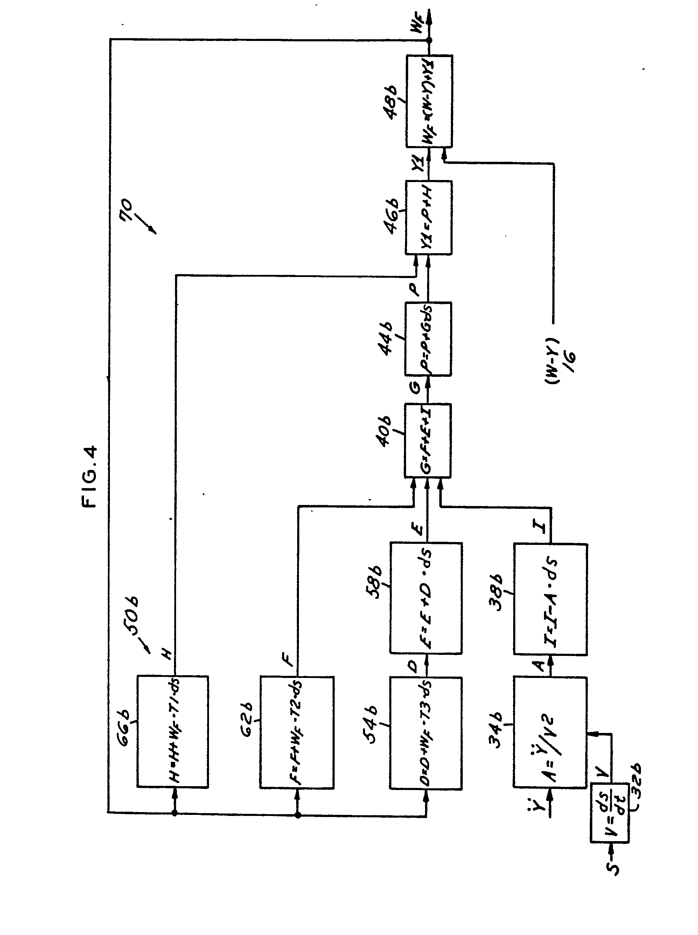

Fig. 4 is a functional block diagram of a discrete circuit digital embodiment 70 of road profile computer 22 (Fig. 1). The elements and variable outputs are laid out in Fig. 4 in correspondence with corresponding analog elements and outputs in Fig. 2. The blocks of Fig. 4 are identified by reference numerals which find appropriate correspondence in Figs. 2 and 3, followed by the letter *b*, including specifically the computation steps of Fig. 3 and highpass filter elements 50b of Fig. 4 which effect highpass spatial filtering in accordance with the invention. Operation of the embodiment of Fig. 4 will be evident from the foregoing discussion. It will be appreciated that the hardware for implementation of the previously-discussed initialization process 80 (Fig. 3) is not shown in Fig. 4. Hardware necessary for such implementation will be evident to the artisan.

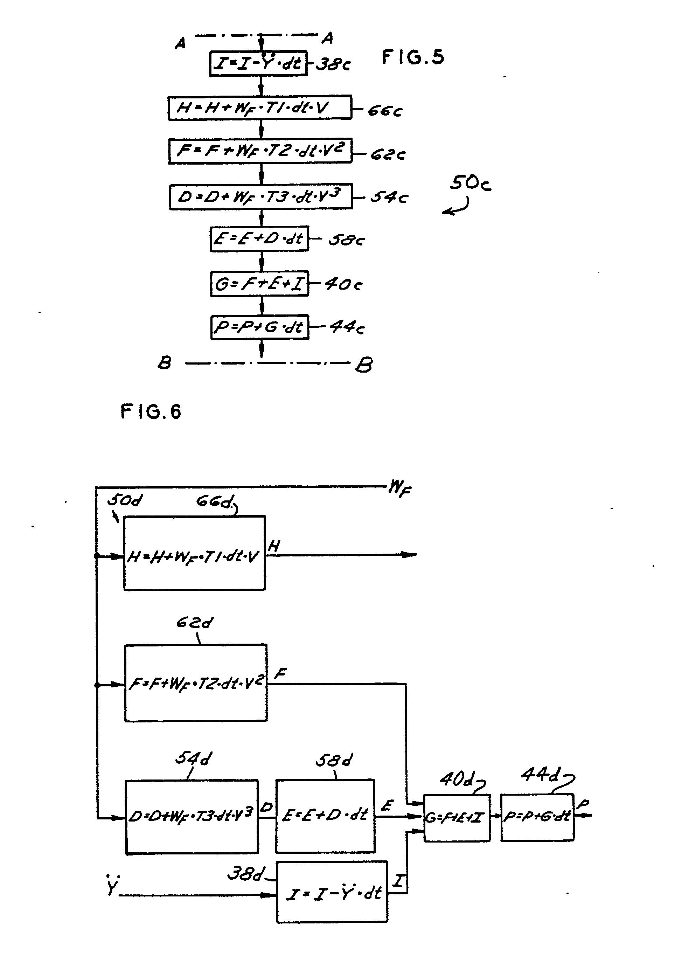

Figs. 5 and 6 illustrate respective modifications to Figs. 3 and 4 wherein the highpass filtering operation is carried out in a "quasi spatial" domain in accordance with the invention utilizing vehicle velocity V and elapsed time *dt* between S pulses in the spatial domain computations. Stages or elements in Figs. 5 and 6 which find correspondence in Figs. 3 and 4 are indicated by respectively identical reference numerals followed by the letters *c* and *d*.

Specifically, Fig. 5 illustrates a modification to Fig. 3 between the lines A—A and B—B in the latter. Note that the terms $dt \cdot V$, $dt \cdot V^2$ and $dt \cdot V^3$ replace the constant *ds* in computation of variables H, F and D respectively. This modification introduces temporal units (1/sec) in variables H, F and D, which are then removed by multiplication by time *dt* in computation of variables H, F, D, E and P. To implement the modification of Fig. 5 in the previous source code listing instructions 290 and 300 are eliminated, and instructions 310—370 are replaced as follows:

```
310  I=I−Y2*T ! T=dt
320  H=H+W1*T1*T*V ! W1=Wf
330  F=F+W1*T2*T*V∧2
340  D=D+W1*T3*T*V∧3
350  E=E+E*T
360  G=F+E+I
370  P=P+G*T
```

Fig. 6 illustrates a "quasi spatial" domain highpass filter 50d for use in place of filter 50b in Fig. 4. The modifications of Figs. 5 and 6 are fully analogous to the pure spatial domain embodiments previously described, and are fully as effective in measuring road profile independently of vehicle speed and/or changes in vehicle speed in accordance with the invention.

## Claims

1. Apparatus (12) for measuring road surface profile W comprising a measurement vehicle (10) adapted to be propelled over a road surface to be measured and including a suspended mass, distance measuring means (16) mounted on said suspended mass for providing a first signal W—Y as a function of distance to the road surface (18) as said vehicle is propelled over the road surface, acceleration measuring means (20) mounted on said suspended mass for providing a second signal $\ddot{Y}$ as a function of acceleration of said suspended mass in a direction normal to the road surface as said vehicle is propelled over the road surface and computer means (22) for determining road profile W as a function of said first and second signals, characterized in that said computer means (22) comprises transducer means (26) responsive to vehicle travel over the road surface for providing a repetitive third signal S indicative of vehicle travel over fixed distance increments ds, means (30—46; 32a—46a; 32b; 38c—44c and 46a; or 32b—38b, 40d—44d and 46b) responsive to said third signal for integrating said second signal with respect to said third signal, and circuit means (48, 48a or 48b) for determining road surface profile W as a function of the equation:

$$W=W—Y+\int\int \frac{\ddot{Y}}{V^2}ds\ ds$$

wherein V is the velocity of the vehicle derived from third signal S.

2. The apparatus (12) set forth in claim 1 further comprising lowpass filter means (50, 50a, 50b, 50c or 50d) responsive to said circuit means to attenuate spatial components of said road profile W greater than a selected maximum wavelength.

3. The apparatus (12) set forth in claim 2 further characterized by means (80) responsive to said transducer means (26) and adapted during initial operation of said apparatus to increment the cutoff wavelength of said filter means from ds to said predetermined wavelength in increments of length ds.

4. A method of measuring road surface profile W which includes the steps of providing a vehicle having a suspended mass adapted to be propelled over a road surface, measuring distance W—Y from the suspended mass to the road surface as the vehicle is propelled over the road surface, determining acceleration $\ddot{Y}$ of said suspended mass with respect to the road surface as the vehicle is propelled over the road surface, and determining road surface profile W as a function of said distance and acceleration, characterized by comprising the steps of measuring vehicle travel over fixed distance increments ds, determining time independent acceleration of said suspended mass and then determining said road surface profile W as a function of the equation

$$W = W - Y + \int\int \frac{\ddot{Y}}{V^2} ds \; ds,$$

wherein V is the velocity of the vehicle derived from said measurement of vehicle travel over fixed distance increments.

5. The method set forth in claim 4 characterized by the additional steps of identifying a maximum desired profile measurement wavelength, and then filtering said time-independent acceleration $\ddot{Y}/V^2$ and said distance W—Y to the road surface to attenuate profile measurement wavelengths greater than said maximum desired wavelength.

6. The method set forth in claim 5 characterized by the addition step during initial operation of establishing a cutoff wavelength of ds for said filtering operation, and progressively increasing said cutoff wavelength in correspondence with distance travelled over said road surface.

## Patentansprüche

1. Anordnung zur Messung eines Straßenprofils W, bestehend aus einem das zu messende Straßenprofil abfahrenden Meßfahrzeug (10) mit einer aufgehängten Masse, einer an der Masse angeordneten Entfernungsmeßeinrichtung (16) zum Erzeugen eines ersten Signals W—Y für die Entfernung von dem von dem Fahrzeug abgefahrenen Profil (18), aus einer an der Masse befestigten Beschleunigungsmeßeinrichtung (20) zum Erzeugen eines zweiten Signals $\ddot{Y}$ für die Beschleunigung der Masse in einer zum Straßenprofil senkrechten Richtung und aus einem Rechner (22) zum Bestimmen des Straßenprofils W abhängig von dem ersten und dem zweiten Signal, dadurch gekennzeichnet, daß der Rechner (22) einen Wandler (26) aufweist, der auf die Bewegung des Fahrzeuges über dem Straßenprofil anspricht und ein sich wiederholendes drittes Signal S erzeugt, das die Fahrzeugbewegung längs fester Entfernungsinkremente ds anzeigt, daß Mittel (30—46; 32a—46a; 32b; 38c—44c und 46a; oder 32b—38b, 40d—44d und 46b) vorgesehen sind, die auf das dritte Signal ansprechen und das zweite Signal mit dem dritten Signal integrieren, und daß eine Schaltungsanordnung (48, 48a oder 48b) vorgesehen ist, um das Straßenprofil W nach der folgenden Gleichung zu bestimmen:

$$W = W - Y + \int\int \frac{\ddot{Y}}{V^2} ds \; ds$$

wobei V die vom dritten Signal abgeleitete Geschwindigkeit des Fahrzeuges ist.

2. Anordnung (12) nach Anspruch 1, ferner bestehend aus einem Tiefpaßfilter (50, 50a, 50b, 50c oder 50d), das auf die Schaltung anspricht, um räumliche Komponenten des Straßenprofils W abzuschwächen, die größer sind als eine ausgewählte maximale Wellenlänge.

3. Anordnung (12) nach Anspruch 2, gekennzeichnet durch eine Einrichtung (8), die auf den Wandler (26) anspricht und während der Anfangsphase des Betriebes der Anordnung die Abschneidewellenlänge des Filters von ds auf die bestimmte Wellenlänge in Inkrementen der Länge ds inkrementiert.

4. Verfahren zum Messen eines Straßenprofils W, bestehend aus einem Fahrzeug mit einer aufgehängten Masse, das das Straßenprofil abfährt, die Entfernung W—Y der Masse zum Straßenprofil mißt, die Beschleunigung $\ddot{Y}$ der Masse gegenüber dem Straßenprofil bestimmt und das Straßenprofil W abhängig von der Entfernung und der Beschleunigung bestimmt, gekennzeichnet durch Abmessen des Fahrzeugweges längs bestimmter Entfernungsinkremente ds, Bestimmen der zeitunabhängigen Beschleunigung der Masse und Berechnen des Straßenprofils W nach der Gleichung

$$W = W - Y + \int\int \frac{\ddot{Y}}{V^2} ds \; ds,$$

wobei V die von der Messung des Fahrzeugweges längs Festentfernungsinkremente abgeleitete Fahrzeuggeschwindigkeit ist.

5. Verfahren nach Anspruch 4, gekennzeichnet durch Identifizieren einer maximal gewünschten Wellenlänge der Profilmessung und durch Filtern der zeitunabhängigen Beschleunigung $\ddot{Y}/V^2$ und der Entfernung W—Y zum Straßenprofil, um Wellenlängen der Profilmessung zu schwächen, die größer sind als die maximale gewünschte Wellenlänge.

6. Verfahren nach Anspruch 5, gekennzeichnet durch Herstellen einer Abschneidewellenlänge für ds während einer anfänglichen Betriebsphase für den Filtervorgang und progressives Vergrößern der Abschneidewellenlänge entsprechend der am Straßenprofil zurückgelegten Entfernung.

## Revendications

1. Appareil (12) de mesure du profil W de la surface d'une route, comprenant un véhicule (10) de mesure destiné à être propulsé sur une surface de route à mesurer et comprenant une masse suspendue, un dispositif (16) de mesure de distance monté sur la masse suspendue et destiné à transmettre un premier signal W—Y en fonction de la distance à la surface (18) de la route lorsque le véhicule est propulsé sur la surface de la route, un dispositif (20) de mesure d'accélération monté sur la masse suspendue et destiné à transmettre un second signal Ÿ en fonction de l'accélération de la masse suspendue en direction perpendiculaire à la surface de la route lorsque le véhicule est propulsé sur la surface de la route, et un dispositif (22) à ordinateur destiné à déterminer le profil W de la route en fonction du premier et du second signal, caractérisé en ce que le dispositif (22) à ordinateur comporte un dispositif (26) à transducteur commandé par le déplacement du véhicule au-dessus de la surface de la route afin qu'il transmette un troisième signal répétitif S représentatif du déplacement du véhicule de distances élémentaires fixes ds, un dispositif (30—46; 32a—46a; 32b; 38c—44c et 46a; ou 32b—38b, 40d—44d et 46b) sensible au troisième signal et destiné à intégrer le second signal par rapport au troisième signal, et un circuit (48, 48a ou 48b) destiné à déterminer le profil W de la surface de la route en fonction de l'équation:

$$W = W - Y + \int\int \frac{\ddot{Y}}{V^2} ds\ ds$$

dans laquelle V désigne la vitesse du véhicule tirée du troisième signal S.

2. Appareil (12) selon la revendication 1, comprenant en outre un filtre passe-bas (50, 50a, 50b, 50c ou 50d) commandé par le circuit est destiné à atténuer les composantes spatiales du profil W de la route qui dépassent une longueur d'onde maximale choisie.

3. Appareil (12) selon la revendication 2, caractérisé en outre par un dispositif (80) commandé par le dispositif (26) à transducteur et destine, pendant la fonctionnement initial de l'appareil, à faire progresser la longueur d'onde de coupure du filtre de ds vers la longueur d'onde prédéterminée par quantités élémentaires de longueur ds.

4. Procédé de mesure du profil W de la surface d'une route, qui comprend les étapes de disposition d'un véhicule ayant une masse suspendue et destiné à être propulsé au-dessus d'une surface de route, de mesure de la distance W—Y de la masse suspendue à la surface de la route lorsque le véhicule est propulsé sur la surface de la route, de détermination de l'accélération Ÿ de la masse suspendue par rapport à la surface de la route lorsque le véhicule est propulsé sur la surface de la route, et de détermination du profil W de la surface de la route en fonction de ladite distance et de ladite accélération, caractérisé en ce qu'il comprend les étapes de mesure du déplacement du véhicule de quantités élémentaires fixes de distance ds, de détermination de l'accélération, indépendante du temps, de la masse suspendue, puis de détermination du profil W de surface de la route en fonction de l'équation:

$$W = W - Y + \int\int \frac{\ddot{Y}}{V^2} ds\ ds,$$

dans laquelle V est la vitesse du véhicule tirée de la mesure de déplacement du véhicule de quantités élémentaires fixes de distance.

5. Procédé selon la revendication 4, caractérisé par les étapes supplémentaires d'identification d'une longueur d'onde maximale voulue de mesure de profil, puis de filtrage de l'accélération indépendante du temps Ÿ/V² et de la distance W—Y à la surface de la route afin que les longueurs d'onde de mesure de profil supérieures à la longueur d'onde maximale voulue soient atténuées.

6. Procédé selon la revendication 5, caractérisé par l'étape supplémentaire, au cours de fonctionnement initial, d'établissement d'une longueur d'onde de coupure de ds pour l'opération de filtrage, et d'augmentation progressive de la longueur d'onde de coupure d'une manière qui correspond à la distance parcourue sur la surface de la route.

FIG.1

FIG.2

0 134 837

FIG.3

```
        START
          │
       INPUT-L
          │
  INITIALIZE - I,
  H, F, D, E, P, L1=0
          │
81 ──  L1=L1+ds
          │
82 ──  T1 = 2·(2π/L1)
          │
84 ──  T2 = 2·(2π/L1)²
          │
86 ──  T3 = (2π/L1)³
          │
DELAY ── HAS DISTANCE ds BEEN TRAVELED ?
   NO                    YES
          │
  READ Y, (W-Y) AND ELAPSED TIME dt
          │
32a ──  V = ds/dt
A ──────────────── A
34a ──  A = Y/V²
          │
38a ──  I = I - A·ds
          │
66a ──  H = H + WF·T1·ds      ── 50a
          │
62a ──  F = F + WF·T2·ds
          │
54a ──  D = D + WF·T3·ds
          │
58a ──  E = E + D·ds
          │
40a ──  G = F + E + I
          │
44a ──  P = P + G·ds
B ──────────────── B
46a ──  Y1 = P + H
          │
48a ──  WF = (W-Y) - Y1
          │
                    YES
          DOES L1 = L ?    NO
```

── 80

3

FIG.4

$$66b$$
$$50b$$
$$H = H + W_F \cdot T1 \cdot ds \quad H$$

$$70$$

$$62b$$
$$F = F + W_F \cdot T2 \cdot ds \quad F$$

$$54b$$
$$D = D + W_F \cdot T3 \cdot ds \quad D$$

$$58b$$
$$E = E + D \cdot ds \quad E$$

$$40b$$
$$G = F + E + I \quad G$$

$$44b$$
$$P = P + G \cdot ds \quad P$$

$$46b$$
$$Y1 = P + H \quad Y1$$

$$48b$$
$$W_F = (W-Y) + Y1 \quad W_F$$

$$34b$$
$$\ddot{Y} \quad A = \ddot{Y}/V2 \quad A$$

$$38b$$
$$I = I - A \cdot ds \quad I$$

$$S \quad V = \frac{ds}{dt} \quad V$$
$$32b$$

$$(W-Y)$$
$$16$$

0 134 837

FIG.5

A $-\cdot-\cdot-\cdot-$ A

$I = I - \dot{Y} \cdot dt$ — 38c

$H = H + W_F \cdot T1 \cdot dt \cdot V$ — 66c

$F = F + W_F \cdot T2 \cdot dt \cdot V^2$ — 62c

50c

$D = D + W_F \cdot T3 \cdot dt \cdot V^3$ — 54c

$E = E + D \cdot dt$ — 58c

$G = F + E + I$ — 40c

$P = P + G \cdot dt$ — 44c

B $-\cdot-\cdot-\cdot-$ B

FIG.6

$W_F$

50d  66d

$H = H + W_F \cdot T1 \cdot dt \cdot V$  H

62d

$F = F + W_F \cdot T2 \cdot dt \cdot V^2$  F

54d  58d  40d  44d

$D = D + W_F \cdot T3 \cdot dt \cdot V^3$  D  $E = E + D \cdot dt$  E  $G = F + E + I$  $P = P + G \cdot dt$  P

$\dot{Y}$  38d  $I = I - \dot{Y} \cdot dt$  I